(19) Europäisches Patentamt
European Patent Office
Office européen des brevets

(11) Publication number: **0 362 568 B1**

(12) # EUROPEAN PATENT SPECIFICATION

(45) Date of publication of patent specification: **10.08.94**

(51) Int. Cl.⁵: **C09D 179/02**, C08J 7/04

(21) Application number: **89116567.2**

(22) Date of filing: **07.09.89**

The file contains technical information submitted after the application was filed and not included in this specification

(54) **Antistatic polyester film.**

(30) Priority: **08.09.88 JP 225069/88**

(43) Date of publication of application:
**11.04.90 Bulletin 90/15**

(45) Publication of the grant of the patent:
**10.08.94 Bulletin 94/32**

(84) Designated Contracting States:
**DE FR GB**

(56) References cited:
**EP-A- 0 102 209**
**FR-A- 2 202 312**
**GB-A- 1 388 083**
**US-A- 4 089 997**

(73) Proprietor: **DIAFOIL HOECHST CO., LTD**
**28-10, Hongo 1-chome**
**Bunkyo-ku Tokyo (JP)**

(72) Inventor: **Takeda, Naohiro**
**5-1 Tsutsujigaoka**
**Midori-ku**
**Yokohama-shi Kanagawa-ken (JP)**
Inventor: **Otani, Yuzo**
**4-6-14 Tsurumaki**
**Setagaya-ku**
**Tokyo (JP)**
Inventor: **Okajima, Nariaki**
**21-21 Umegaoka**
**Midori-ku**
**Yokohama-shi Kanagawa-ken (JP)**
Inventor: **Ito, Yoshihiko**
**2-6-3 Tachibanadai**
**Midori-ku**
**Yokohama-shi Kanagawa-ken (JP)**
Inventor: **Kinoshita, Shin-ichi**
**2-6-3 Tachibanadai**
**Midori-ku**
**Yokohama-shi Kanagawa-ken (JP)**

(74) Representative: **TER MEER - MÜLLER - STEINMEISTER & PARTNER**
**Mauerkircherstrasse 45**
**D-81679 München (DE)**

EP 0 362 568 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an antistatic polyester film having excellent antistatic properties.

Biaxially oriented polyester films are widely used because they have excellent properties. However, they involve a problem with respect to the ease of being charged.

Methods for preventing polyester films from being charged include a method in which an anionic compound such as an organic sulfonate or an organic phosphate is incorporated, a method in which a metal compound is vapor-deposited, and a method in which an anionic compound, a cationic compound or so-called electroconductive particles are coated. The method in which an anionic compound is incorporated can be used at low cost but has a limited antistatic effect, as well as having the problem that the usable compound is a low-molecular weight compound and this compound causes a reduction in adhesion between the film and any layer laminated thereon owing to the blooming of the compound, the absence of water resistance, and the transfer of the compound used.

The method in which a metal compound is vapor-deposited is capable of producing films which exhibit excellent antistatic properties and which have been recently widely used for producing transparent electroconductive films. However, though this method is suitable for particular applications, it cannot easily be employed for producing general antistatic films because of its high production cost.

The method in which electroconductive carbon or metal particles are coated has an advantage in that the film produced by the method exhibits a relatively good antistatic effect and the method is capable of producing antistatic films at a relatively low cost, but has a problem in that the transparency of the film produced deteriorates.

The method in which an anionic compound or a cationic compound is coated as an antistatic agent is therefore widely used as an antistatic method for biaxially oriented polyester films. One method of producing biaxially oriented polyester films having coating layers is the so-called in-line coating method in which a film is stretched after a coating solution has been coated thereon and then subjected to heat treatment. In this method, since the formation of a film and the coating are simultaneously performed, it is possible not only to obtain wide films at a relatively low cost but also to obtain polyester films exhibiting excellent adhesion to coating layers and having thinner coating layers and characteristic surface properties, as compared with a method in which coated layers is formed by coating a coating solution on polyester films which were biaxially stretched.

When antistatic polyester films are produced by the in-line coating method, however, since the antistatic agent is thermally unstable, the antistatic agent used volatilizes or is thermally decomposed during the stretching and heat treatment process if in-line coating is carried out under normal conditions. This prevents the exhibition of an expected antistatic effect in some cases.

In addition, when conditions for the heat treatment such as the temperature and the residence time of a film are moderated, although the antistatic effect can be exhibited because the volatilization and decomposition of the antistatic agent are prevented, only films exhibiting unsatisfactory mechanical strength and dimensional stability can be produced.

US-A-4 089 997 discloses a process for preparing an antistatic polyester film by applying directly to an unstretched or only monoaxially stretched polyester film support an antistatic layer from an aqueous coating composition consisting essentially of 30 to 80% by weight of an electroconductive polymer which may have cationic nitrogens, 10 to 40% by weight of a stretch-improving agent and 10 to 40% by weight of a filler material, drying said antistatic layer and stretching the polyester support biaxially or in a direction perpendicular to the first stretching operation, and heat-setting the thus treated film. The stretch-improving agent is required to enhance the stretchability of the polymeric antistatic agent. GB-A-1 388 083 relates to a photographic element comprising a layer of a light-sensitive silver halide emulsion and a separate non-light sensitive layer comprising at least one polymer having cationic nitrogens in the main chain thereof as an antistatic agent.

As a result of energetic investigations performed by the inventors in consideration of the above-described problem, the inventors have found that a polymer having a specific molecular structure exhibits excellent antistatic properties and is stable during an in-line coating process. The present invention has been accomplished based on this finding.

In an aspect of the present invention, there is provided an antistatic polyester film which comprises a polyester film and at least one coating layer containing an antistatically effective amount of a polymer having cationic nitrogens in the main chain thereof on one or both surfaces of said base polyester film, said polymer having cationic nitrogens in the main chain thereof being at least one polymer selected from the group consisting of ionene polymers which have respectively constitutional units represented by the following formulae (i), (ii), (iii) or (iv):

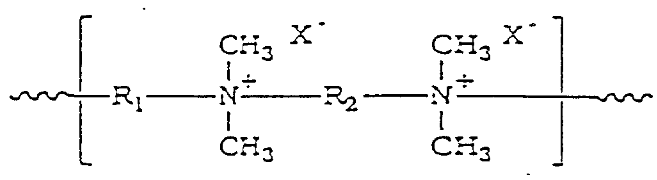 (i)

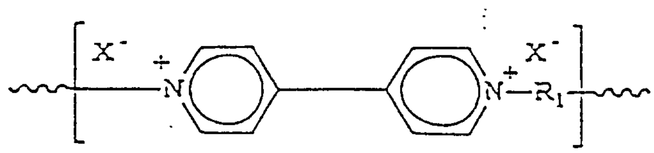 (ii)

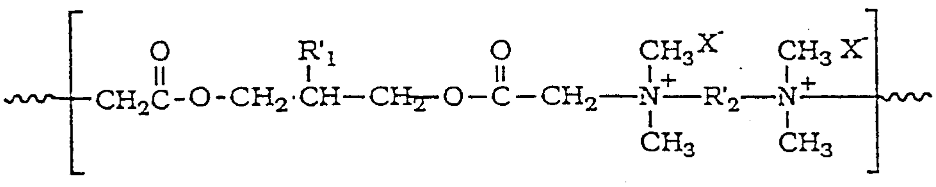 (iii)

or

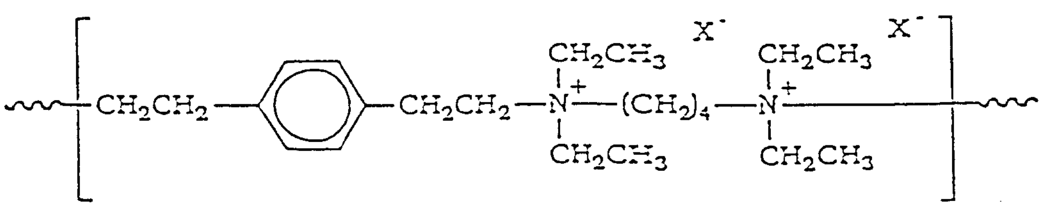 (iv)

wherein X is bromine or chlorine; $R_1$ and $R_2$ independently represent alkylene groups, arylene groups, xylylene groups, divalent groups (A) having hetero-elements derived from compounds selected from the group consisting of ethers, urea and derivatives thereof, piperazine and derivatives thereof, or divalent groups (B) derived from compounds selected from the group consisting of polyacrylates, polyesters, polyurethanes, polyolefins and halogenated polyolefins; said alkylene groups, said arylene groups, said xylylene groups and said divalent groups (A) may be substituted by a hydroxy group or a monovalent group derived from a compound selected from the group consisting of ester, ethers, alcohols, amides, urethanes and ketones; $R'_1$ represents a monovalent group derived from any desired organic compound which may contain various functional groups; $R'_2$ represents a divalent group derived from any desired organic compound; said antistatic polyester film being formed by the steps comprising:
stretching an amorphous polyester film monoaxially by 2 to 6 times at a temperature from 60 to 130 °C by a roll stretching method;
coating one or both surfaces of the monoaxially stretched polyester film with a coating solution comprising the polymer having cationic nitrogens in the main chain thereof;
optionally drying the coated monoaxially stretched polyester film;
stretching the resultant monoaxially stretched polyester film by 2 to 6 times at a temperature from 80 to 130 °C in the direction perpendicular to the previous stretching direction; and
subjecting to heat-treatment at a temperature from 150 to 250 °C for 1 to 600 seconds.

The polyester in the present invention may include polyethylene terephthalate in which 80 mol% or more of the constitutional units are ethylene terephthalate units or polyethylene naphthalate in which 80 mol% or more of the constitutional units are ethylene naphthalate units.

The polyester film of the present invention may contain inorganic particles, organic particles, an organic lubricant, an antistatic agent, a stabilizer, a dye, pigments and an organic polymer, as occasion demands. Although fine particles are contained in polyester films in order to impart slipping properties to the polyester

films, the kind, size and amount of the projection forming agent (fine particles) are appropriately selected in accordance with such properties as slipping properties and transparency demanded for the product used.

The polymer having cationic nitrogens in the main chain thereof used in the present invention, is an ionene polymer. The ionene polymer is described in detail in Chapter 4 "IONENE POLYMERS: PREPARATION, PROPERTIES AND APPLICATIONS", ALAN D. WILSON AND HAVARD J. PROSSER (Ed.) "DEVELOPMENTS IN IONIC POLYMERS-2" ELSEVIER APPLIED SCIENCE PUBLISHERS, pp163 - 189, issued in 1986. A typical example of the structures of ionene polymers described in this publication and used in the present invention is given below by the constitutional unit (i).

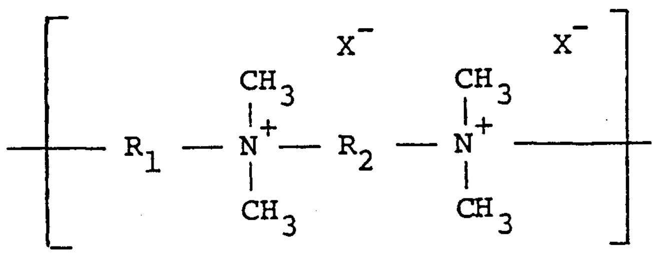

(i)

wherein X is a bromine or chlorine atom and $R_1$ and $R_2$ are respectively a divalent group defined below and may be the same group.

Examples of groups represented by $R_1$ or $R_2$ include alkylene groups such as methylene, ethylene and propylene groups; arylene groups such as phenylene, tolylene and xylene groups; divalent groups (A) having hetero-elements derived from ethers such as dimethyl ether and diethyl ether, urea and derivatives thereof such as N,N'-dimethyl urea, N,N'-diethyl urea and N,N'-dipropyl urea, piperazine and derivatives thereof; and other divalent groups (B) derived from compounds selected from the group consisting of polyacrylates, polyesters, polyurethanes, polyolefins and halogenated polyolefins. For example, as in a 2-hydroxy-1,3-propylene group, these groups may have characteristic groups such as monovalent groups derived from esters, ethers, alcohols, amides, urethanes, ketones and other compounds.

As a method of synthesizing ionene polymers, the reactions described below which are described in the above publication can be employed, but the method is not limited to them.

(1)

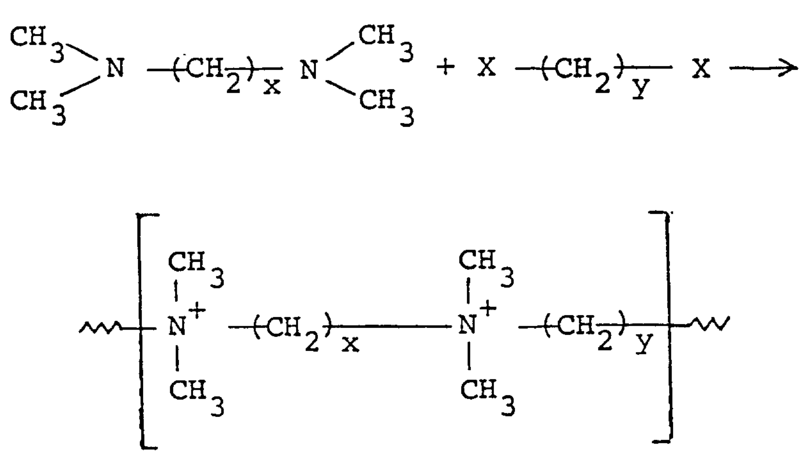

(II)

wherein X is a halogen element such as Br or Cl, x and y are respectively any desired integer of 1 or more and may be either the same or different.

(2)

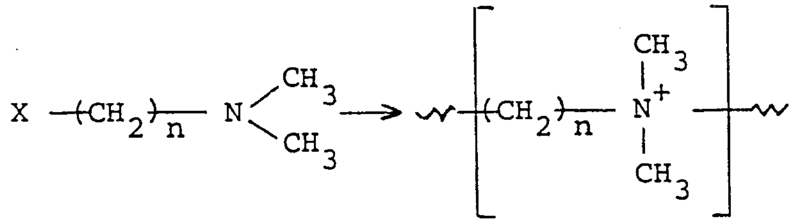

(III)

wherein X is a halogen element such as Br or Cl and n is any desired integer of 1 or more.

(3)

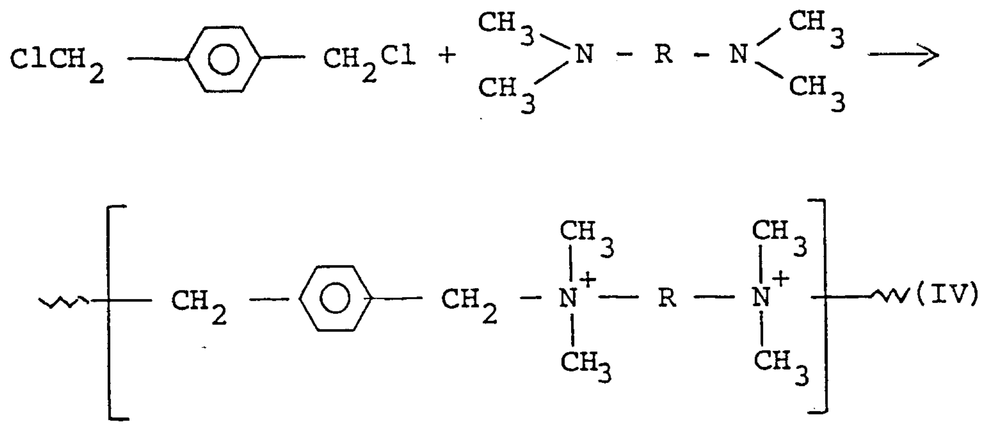

(IV)

wherein R is the same divalent group as defined for $R_1$ and $R_2$ in Formula (i).

(4)

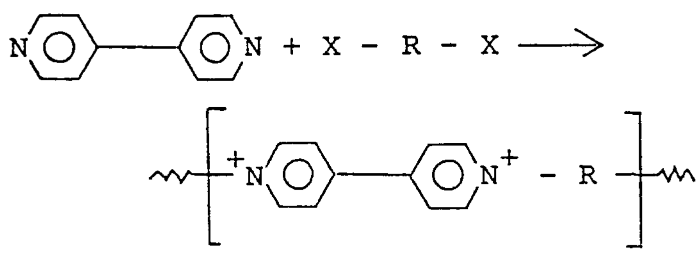

(V)

wherein X is a halogen element such as Br or Cl and R is the same divalent group as defined for $R_1$ and $R_2$ in Formula (i).

(5)

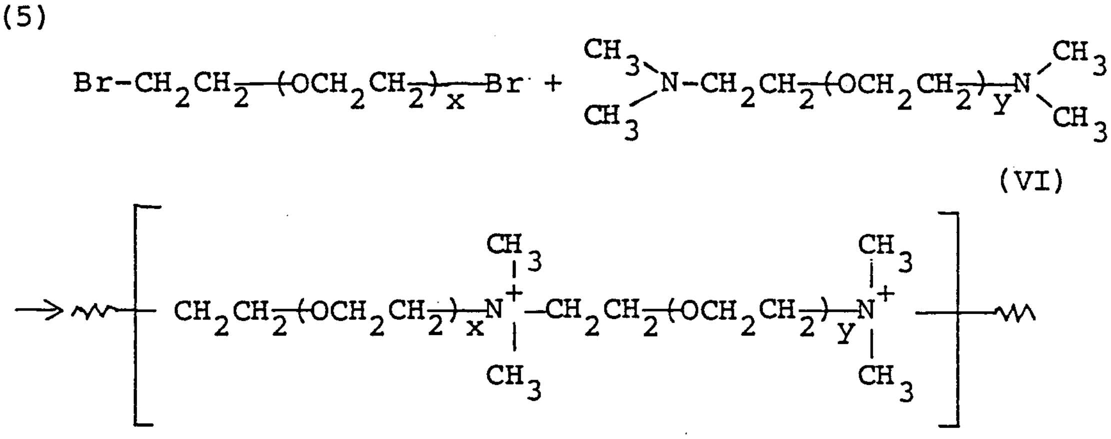

(VI)

wherein x and y are respectively an integer of 1 to 4.

(6)

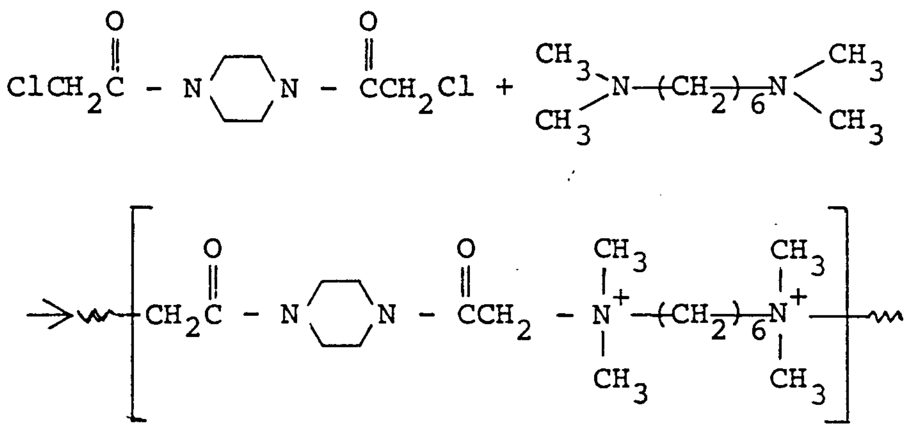

(VII)

(7)

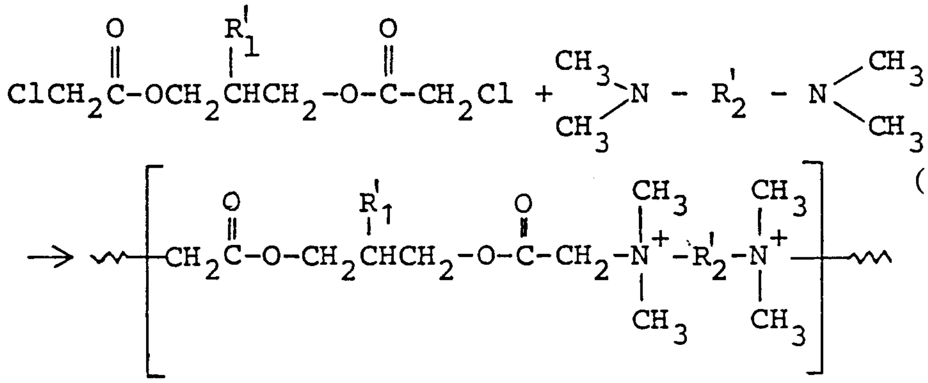

(iii)

wherein $R'_1$ is a monovalent group derived from any desired organic compound which may contain various functional groups and $R'_2$ is a divalent group derived from any desired organic compound.

(8)

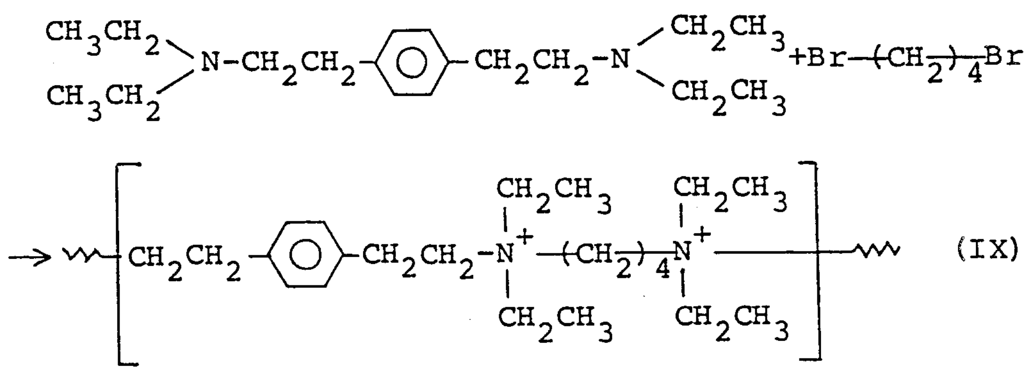

(IX)

(9)

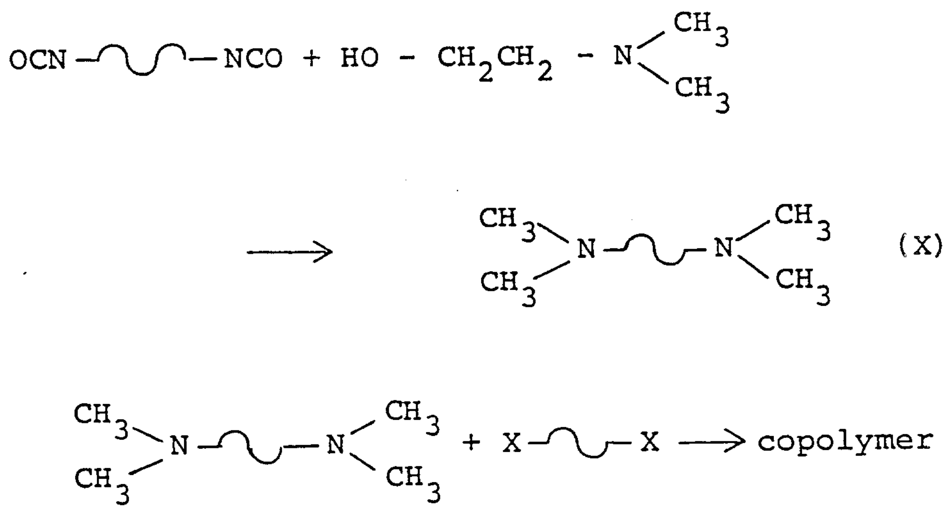


(X)

wherein X is a halogen element such as Br or Cl, 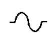 is a divalent group derived from various polymers and oligomers or the same divalent group as defined for $R_1$ and $R_2$ in Formula (i).

Examples of ionene polymers and derivatives thereof include the compounds disclosed in Japanese Patent Publication Nos. 53-23377 and 54-10039 and Japanese Patent Application Laid-Open (KOKAI) Nos. 47-34581, 56-76451, 58-93710, 61-18750 and 63-68687 and so on. Examples of commercially available ionene polymer products include the polymers having the structures given in Table 1 described below which are produced by Nihon Kasei Co., Ltd., but the ionene polymer products used in the present invention are not limited to these products.

Table 1

| Compound No. | Trade Name | Structure | Average Molecular Weight |
|---|---|---|---|
| 1 | KA-1700 | 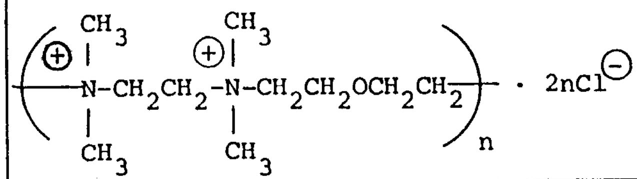 | - 6,000 |
| 2 | KA-1600 | 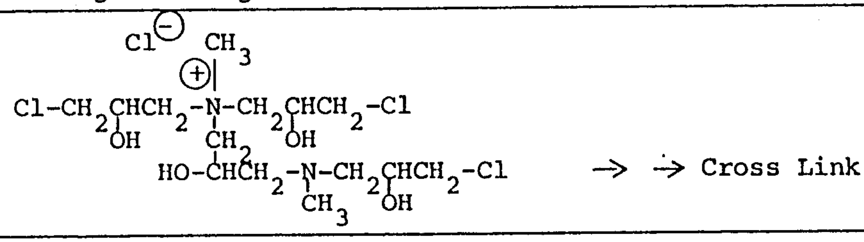 | - 60,000 |
| 3 | KA-1089 | 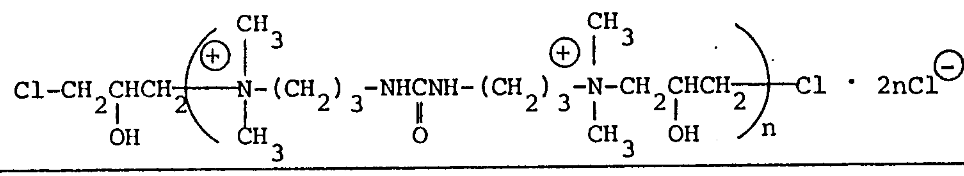 | - 2,500 |
| 4 | KA-1090 | The same structure as KA-1089<br>(a different synthetic method was employed) | - 7,000 |
| 5 | KA-1091 | 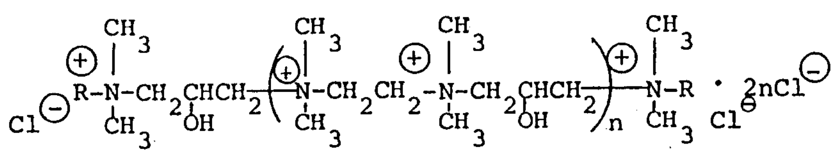 (R=$C_{12}$, $C_{14}$, $C_{18}$) | - 2,750 |

(Continued)

| Compound No. | Trade Name | Structure | Average Molecular Weight |
|---|---|---|---|
| 6 | KA-1092 | 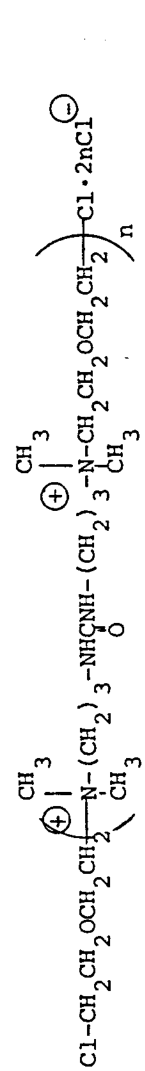 | - 7,100 |
| 7 | KA-1093 | 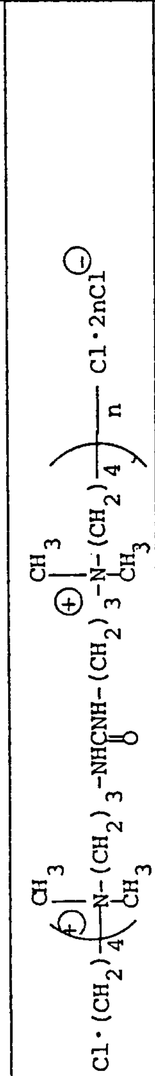 | - 6,900 |
| 8 | KA-1094 | 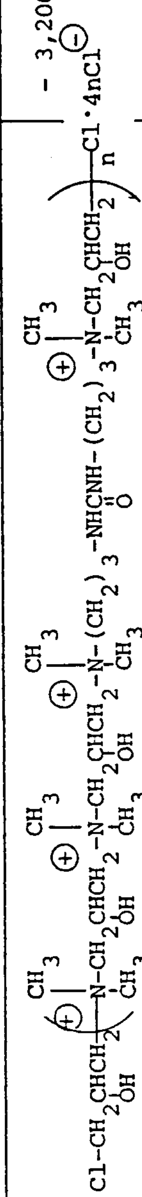 | - 3,200 |
| 9 | KA-1095 | 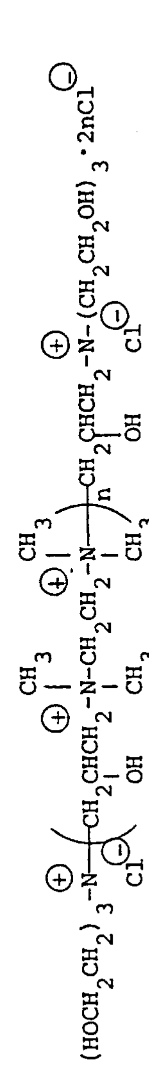 | - 3,150 |
| 10 | KA-1096 | 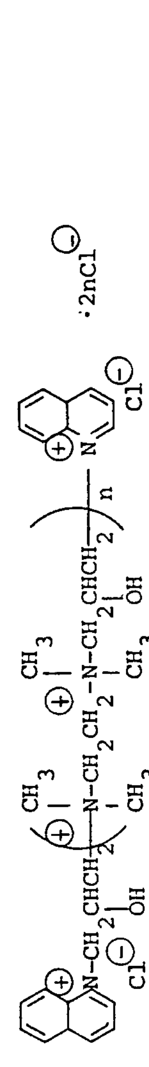 | - 3,170 |
| 11 | KA-2511 | 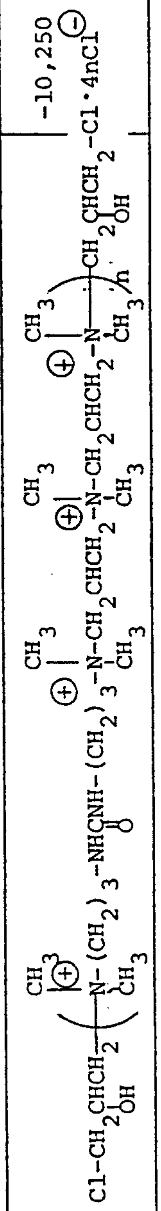 | -10,250 |

The coating solution used in the present invention is formed by dissolving or dispersing the polymer having cationic nitrogens in the main chain thereof preferably in water. The concentration of the polymer may be adjusted so that the coating solution can be easily coated on a polyester film without any particular limit. Although the medium used for the coating solution is preferably water, an organic solvent such as an alcohol, Cellosolve or N-methylpyrrolidone may be added with the coating solution for the purpose of improving the dispersibility, the coating properties on the polyester film serving as a substrate or the film-forming properties of the coating solution.

The coating solution used in the present invention may contain a methylolated or alkylolated urea compound, melamine compound, guanamine compound, acrylamide compound or polyamide compound, an epoxy compound, an aziridine compound, a block polyisocyanate, silane coupling agent, titanium

coupling agent, a zirco-aluminate coupling agent, a heat-, peroxide- and light-reactive vinyl compound or a photosensitive resin, which serve as crosslinking agent for improving the anti-blocking properties, water resistance, solvent resistance and mechanical strength of the coating layer. The coating solution may also contain particles of an inorganic compound such as silica, silica sol, alumina, alumina sol, zirconium sol, kaolin, talc, calcium carbonate, titanium oxide, a barium salt, carbon black, molybdenum sulfide or antimony oxide sol for the purpose of improving the anti-blocking properties and slipping properties. Further, the coating solution may contain a polymer other than the ionene polymer used in the present invention for the purpose of improving the characteristics of the coating solution and the coating layer. Examples of such polymers include various types of water-soluble polymer and cationic and nonionic water dispersions and hydrosol. Examples of water-soluble polymers include synthetic polymers such as polyvinyl alcohols, polyacrylamides, polyalkylene glycols, polyalkylene imines or polyvinyl pyrrolidones; semi-synthetic polymers such as methyl cellulose or hydroxyethyl cellulose; natural polymers such as starch, succarides, gum arabic, dextran, pullulan, glue, gelatin or casein. Examples of cationic or nonionic water dispersions and hydrosol include water dispersions and hydrosol of polyesters, polyacrylates, polyurethanes, polyamides, halogenated polyolefins, polyvinylidene chloride or styrene-butadiene rubber.

The content of the crosslinking agent is 0 to 10,000 parts by weight, preferably 5 to 200 parts by weight, the content of the inorganic particles is 0 to 1,000 parts by weight, preferably 0.01 to 500 parts by weight, and the content of the polymer other than the ionene polymer is 0 to 100,000 parts by weight, preferably 0 to 5,000 parts by weight, each based on 100 parts by weight of the polymer having cationic nitrogens in the main chain thereof.

Further, the coating solution may contain an antifoaming agent, a coating properties modifier, a thickening agent, an organic lubricant, organic polymer particles, an antioxidant, an ultraviolet absorber, a foaming agent or a dye, as occasion demands.

The antistatic polyester film of the present invention is prepared by a method in which a coating solution comprising the polymer having cationic nitrogens in the main claim thereof is coated on a monoaxially stretched polyester film which is 2 to 6 times stretched by a roll stretching method at 60 to 130 °C, and the monoaxially stretched polyester film is then 2 to 6 times stretched at 80 to 130 °C in the direction perpendicular to the direction of the previous stretching after it has been appropriately dried or immediately after the coating without drying, and is subjected to heat treatment at 150 to 250 °C for 1 to 600 seconds.

This method enables drying of the coating layer at the same time as the stretching and a reduction in the thickness of the coating layer according to the stretch ratio employed. This method is therefore capable of producing a film which is suitable for use as a polyester film substrate at a relatively low cost.

The coating solution used in the present invention may be coated on either only one surface of the polyester film or both surfaces thereof. When the coating solution is coated on only one surface, a coating layer is formed on the other surface by using a coating solution other than the coating solution used in the present invention, as occasion demands, so that other properties can be imparted to the polyester film of the present invention. In order to improve the coating properties of the coating solution on the film and the adhesion thereto, the film may be subjected to chemical treatment or discharge before coating. In addition, in order to improve the adhesion of the biaxially oriented polyester film of the present invention to the coating layer and the coating properties of the film, the coating layer may be subjected to discharge treatment after it has been formed.

The thus-produced polyester film on which the coating solution is coated preferably has a thickness within the range of 3 to 500 µm, and the thickness of the coating layer is preferably 0.01 to 5 µm, more preferably 0.02 to 1 µm. If the thickness of the coating layer is less than 0.01 µm, unevenness occurs in the coating layer of products because uniform coating layers cannot be easily obtained, while if the thickness is over 5 µm, the handling of the films produced become difficult owing to the deterioration in the slipping properties.

The present invention will be explained more in detail, while referring the following non-limitative Examples.

The evaluation methods employed in the examples are as follows:

(1) Charge attenuation:

A sample film was charged by applying a voltage of 10 kV to a discharge electrode placed at a height of 2 cm from the sample film in an atmosphere at 23 °C and 50 %RH using Static Onestometer (trade name) manufactured by Shishido Shokai K.K. The discharge was stopped after the amount of charge has saturated. Then, the charge attenuation of the sample was measured by using an electrometer placed at a

height of 2 cm from the sample, and evaluation was made by using as a criterion the half-life time measured.

less than 5 seconds: very good
5 to 30 seconds : good
30 to 600 seconds : slightly good
over 600 seconds : poor

(2) Surface resistivity:

A concentric electrode 16008A (trade name) manufacture by Yokokawa Hewlett-Packard Co., Ltd. which had an inner electrode with a diameter of 50 mm and an outer electrode with a diameter of 70 mm was placed on a sample film in an atmosphere at 23°C and 50 %RH. A voltage of 100 V was then applied to the sample, and the surface resistivity of the sample was measured by using a high resistance meter 4329A (trade name) manufactured by the same corporation. Evaluation was made on the basis of the following criteria:

less than $10^9$ Ω/□: very good
$10^9$ to $10^{11}$ Ω/□ : good
$10^{11}$ to $10^{13}$ Ω/□ : slightly good
over $10^{13}$ Ω/□ : poor

(3) Ash test

A film sample was charged by rubbing the surface thereof back and forth 10 times by gauze which was held by a finger tip in an atmosphere at 23°C and 50 %RH and then approached silica fine particles Syloid 150 (trade name) manufactured by Fuji Devison Co., Ltd. The distance at which the fine particles were attracted by the film was measured, and evaluation was made by using the following criteria:

0 to 0.5 cm : good
0.5 to 2 cm : slightly poor
over 2 cm : poor

When the coating layer is damaged by rubbing with the gauze, the antistatic effect of the film is lost. Thus, this test can be also employed for evaluating the strength of the coating layer.

EXAMPLE 1

A coating solution A containing 20 parts (solid content) of polyvinyl alcohol with a degree of saponification of 88% and a degree of polymerization of 800 and 80 parts of ionene polymer KA1092 (trade name) manufactured by Nihon Kasei Co., Ltd.; a coating solution B containing 20 parts of the polyvinyl alcohol and 80 parts of KA1600 (trade name) and a coating solution C containing 20 parts of the polyvinyl alcohol and 80 parts of KA1700 (trade name) were prepared.

Polyethylene terephthalate of an intrinsic viscosity of 0.65 was melt-extruded at a temperature of 280 to 300°C and cast on a cooling drum in combination with an electrostatic contact method to obtain an amorphous film with a thickness of 820 µm. The thus-formed film was then 3.3 times stretched in the machine direction, and each of the coating solutions A, B, C was coated on the film. The coated film was then 3.3 times stretched in the transverse direction and subjected to heat treatment at 210°C to obtain a film comprising a polyester film substrate having a thickness of 75 µm and a coating layer having a thickness of 0.04 µm.

All the films obtained by coating the solutions A, B and C exhibited very good charge attenuation and surface resistivity, as well as good results in the ash tests.

EXAMPLE 2:

A coating solution containing 10 parts of polyvinyl alcohol having a degree of saponification of 88% and a degree of polymerization of 800, 80 parts of ionene polymer KA1700 (trade name) manufactured by Nihon Kasei Co., Ltd. and 10 parts of alkylolmelamine was prepared by using water as a medium. The thus-prepared coating solution was then coated in the same manner as in EXAMPLE 1 to obtain a film comprising a polyester film substrate having a thickness of 75 µm and a coating layer having a thickness of 0.03 µm.

The thus-formed film exhibited very good results of the evaluations of the charge attenuation, the surface resistivity and the ash test.

EXAMPLE 3:

A coating solution containing 40 parts of polyvinyl alcohol having a degree of saponification of 88% and a degree of polymerization of 800, 40 parts of ionene polymer KA1600 (trade name) manufactured by Nihon Kasei Co., Ltd., 10 parts of alkylolmelamine and 10 parts of zirconium compound Zircosol ZC-2 (trade name) manufactured by Daiichi Kigenso-kagaku Co., Ltd. was prepared by using water as a medium. The thus-prepared coating solution was then coated in the same manner as in EXAMPLE 1 to obtain a film comprising a polyester film substrate having a thickness of 75 µm and a coating layer having a thickness of 0.03 µm.

The thus-formed film exhibited very good results of the evaluations of the charge attenuation, the surface resistivity and the ash test.

EXAMPLE 4:

Polyethylene terephthalate with an intrinsic viscosity of 0.62 containing 0.9% by weight of polyethylene glycol having a molecular weight of 9000 was melt-extruded at a temperature of 280 to 300 °C and cast on a cooling drum in combination with an electrostatic contact method to botain an amorphous film having a thickness of 182 µm. The thus-formed film was then 3.9 times stretched in the machine direction at 95 °C. A coating solution comprising 20 parts of polyvinyl alcohol having a degree of saponification of 88% and a degree of polymerization of 800, 40 parts of ionene polymer KA1700 (trade name) manufactured by Nihon Kasei Co., Ltd., 40 parts of alkylolmelamine and water serving as a medium was coated on the film. The coated film was then 3.9 times stretched in the transverse direction and subjected to heat treatment at 230 °C to obtain a film comprising a polyester film substrate having a thickness of 12 µm and a coating layer having a thickness of 0.04 µm.

The thus-formed film exhibited good charge attenuation and surface resistivity and very good results of the evaluation by the ash test.

COMPARATIVE EXAMPLE 1:

Polyethylene terephthalate with an intrinsic viscosity of 0.65 was melt-extruded at a temperature of 280 to 300 °C and cast on a cooling drum in combination with an electrostatic contact method to obtain an amorphous film having a thickness of 820 µm. The thus-formed film was then 3.3 times stretched in the machine direction at 95 °C and then 3.3 times stretched in the transverse direction at 110 °C, and then subjected to heat treatment at 210 °C to obtain a biaxially stretched polyester film having a thickness of 75 µm.

The thus-formed film exhibited poor charge attenuation, surface resistivity and results of the evaluation by the ash test.

The results of Examples 1 to 4 and Comparative Example 1 are collectively shown in Table 1.

Table 1

| | Surface Resistivity ( Ω/□ ) | Half-life Period for Charge Attenuation (Sec) | Ash Test |
|---|---|---|---|
| Example 1 (A)<br>(B)<br>(C) | $2 \times 10^{8}$<br>$1 \times 10^{9}$<br>$8 \times 10^{8}$ | below 1<br>2<br>1 | Good |
| Example 2 | $1 \times 10^{9}$ | 2 | Good |
| Example 3 | $9 \times 10^{10}$ | 13 | Good |
| Example 4 | $2 \times 10^{9}$ | 6 | Good |
| Comparative Example 1 | above $1 \times 10^{16}$ | above 600 | Poor |

## Claims

1. An antistatic polyester film which comprises a polyester film and at least one coating layer containing an antistatically effective amount of a polymer having cationic nitrogens in the main chain thereof on one or both surfaces of said base polyester film, said polymer having cationic nitrogens in the main chain thereof being at least one polymer selected from the group consisting of ionene polymers which have respectively constitutional units represented by the following formulae (i), (ii), (iii) or (iv):

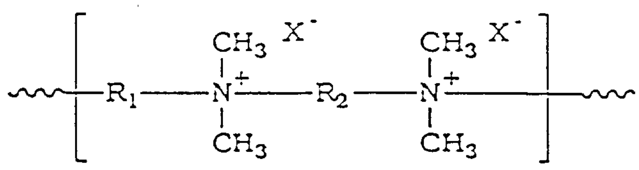
(i)

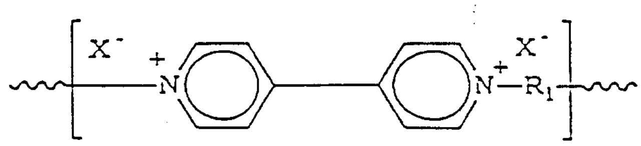
(ii)

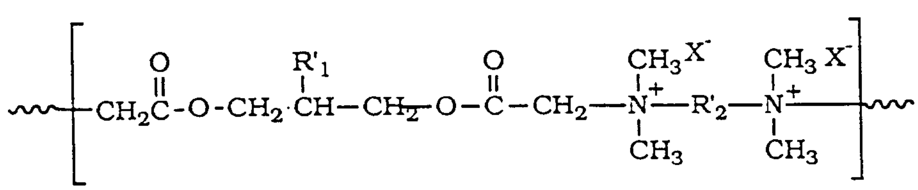
(iii)

or

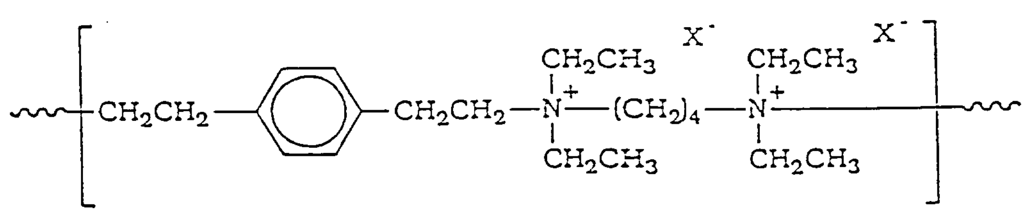
(iv)

wherein X is bromine or chlorine; $R_1$ and $R_2$ independently represent alkylene groups, arylene groups, xylylene groups, divalent groups (A) having hetero-elements derived from compounds selected from the group consisting of ethers, urea and derivatives thereof, piperazine and derivatives thereof, or divalent groups (B) derived from compounds selected from the group consisting of polyacrylates, polyesters, polyurethanes, polyolefins and halogenated polyolefins; said alkylene groups, said arylene groups, said xylylene groups and said divalent groups (A) may be substituted by a hydroxy group or a monovalent group derived from a compound selected from the group consisting of esters, ethers, alcohols, amides, urethanes and ketones; $R'_1$ represents a monovalent group derived from any desired organic compound which may contain various functional groups; $R'_2$ represents a divalent group derived from any desired organic compound; said antistatic polyester film being formed by the steps comprising:
stretching an amorphous polyester film monoaxially by 2 to 6 times at a temperature from 60 to 130 °C by a roll stretching method;
coating one or both surfaces of the monoaxially stretched polyester film with a coating solution comprising the polymer having cationic nitrogens in the main chain thereof;
optionally drying the coated monoaxially stretched polyester film;

stretching the resultant monoaxially stretched polyester film by 2 to 6 times at a temperature from 80 to 130 °C in the direction perpendicular to the previous stretching direction; and
subjecting to heat-treatment at a temperature from 150 to 250 °C for 1 to 600 seconds.

**2.** The antistatic polyester film according to claim 1, wherein said coating layer further comprises a polymer other than the polymer having nitrogens in the main chain thereof.

**3.** The antistatic polyester film according to claim 2, wherein the content of said polymer other than the polymer having nitrogens in the main chain thereof in said coating layer is O to 100,000 parts by weight based on 100 parts by weight of said polymer having cationic nitrogens in the main chain thereof.

**4.** The antistatic polyester film according to claim 2, wherein said polymer other than the polymer having nitrogens in the main chain thereof is one selected from the group consisting of water-soluble polymers, and cationic or nonionic water dispersions or hydrosols.

**5.** The antistatic polyester film according to claim 4, wherein said water-soluble polymers is at least one selected from the group consisting of polyvinyl alcohol, polyacrylamides, polyalkylene glycols, polyalkylene imines, polyvinyl pyrrolidone, methyl cellulose, hydroxy ethyl cellulose, starch, saccharides, gum arabic, dextran, pullulan, glue, gelatin and casein.

**6.** The antistatic polyester film according to claim 4, wherein said cationic or nonionic water dispersions or hydrosols is at least one selected from the group consisting of water dispersions and hydrosols of polyesters, polyacrylates, polyurethanes, polyamides, halogenated polyolefins polyvinylidene chloride and styrene-butadiene rubber.

**7.** The antistatic polyester film according to claim 1, wherein said coating layer further comprises a crosslinking agent.

**8.** The antistatic polyester film according to claim 7, wherein the content of said crosslinking agent in said coating layer is O to 10,000 parts by weight based on 100 parts by weight of said polymer having cationic nitrogens in the main chain thereof.

**9.** The antistatic polyester film according to claim 1, wherein said coating layer further comprises inorganic particles.

**10.** The antistatic polyester film according to claim 9, wherein the content of said inorganic particles in said coating layer is O to 1,000 parts by weight based on 100 parts by weight of said polymer having cationic nitrogens in the main chain thereof.

## Patentansprüche

**1.** Antistatische Polyesterfolie, umfassend eine Polyesterfolie und mindestens eine Überzugsschicht, welche eine antistatisch wirksame Menge eines Polymeren mit kationischen Stickstoffatomen in dessen Hauptkette enthält, auf einer oder beiden Oberflächen der Polyestergrundfolie, wobei das Polymer mit kationischen Stickstffatomen in dessen Hauptkette mindestens ein Polymer ist, welches aus der aus Ionene-Polymeren, welche die jeweiligen durch die folgenden Formeln (i), (ii), (iii) oder (iv) angegebenen Aufbaueinheiten besitzen, bestehenden Gruppe gewählt ist:

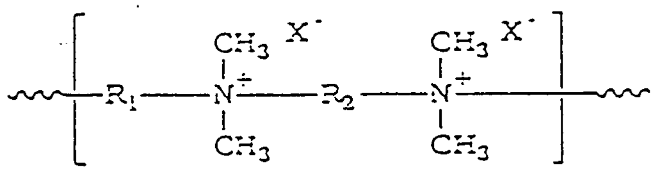

(i)

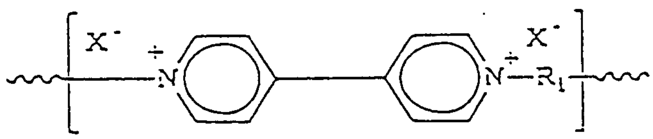

(ii)

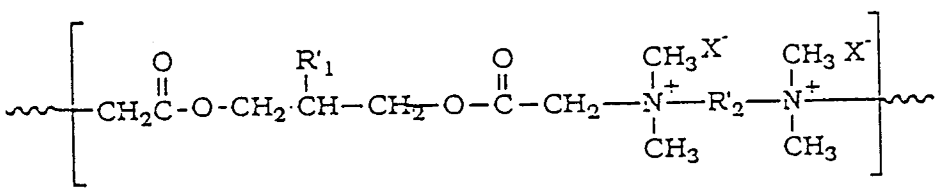

(iii)

oder

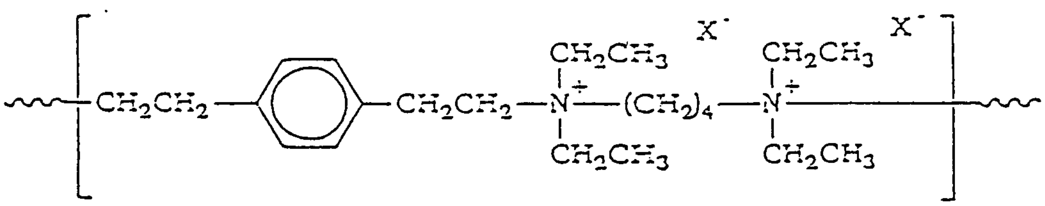

(iv)

worin X Brom oder Chlor ist; $R_1$ und $R_2$ unabhängig voneinander Alkylengruppen, Arylengruppen, Xylylengruppen, zweiwertige Gruppen (A) mit Heteroelementen, welche aus Verbindungen abgeleitet sind, die aus der aus Ethern, Harnstoff und Derivaten davon, Piperazin und Derivaten davon bestehenden Gruppe gewählt sind, oder zweiwertige Gruppen (B), welche aus Verbindungen abgeleitet sind, die aus der aus Polyacrylaten, Polyestern, Polyurethanen, Polyolefinen und halogenierten Polyolefinen bestehenden Gruppe gewählt sind, bedeuten; wobei die Alkylengruppen, Arylengruppen, Xylylengruppen und die zweiwertigen Gruppen (A) substituiert sein können durch eine Hydroxygruppe oder eine einwertige Gruppe, welche aus einer Verbindung abgeleitet ist, die aus der aus Ester, Ethern, Alkoholen, Amiden, Urethanen und Ketonen bestehenden Gruppe gewählt ist; $R'_1$ eine einwertige Gruppe bedeutet, welche aus irgendeiner erwünschten organischen Verbindung, welche verschiedene funktionellen Gruppen enthalten kann, abgeleitet ist; $R'_2$ eine zweiwertige Gruppe bedeutet, welche aus irgendeiner erwünschten organischen Verbindung abgeleitet ist; wobei die antistatische Polyesterfolie durch Stufen gebildet ist, welche

das 2- bis 6-fache monoaxiale Recken einer amorphen Polyesterfolie bei einer Temperatur von 60 bis 130 °C mittels einem Walzreckverfahren;

das Beschichten einer oder beider Oberflächen der monoaxial gereckten Polyesterfolie mit einer das Polymer mit kationischen Stickstoffatomen in dessen Hauptkette umfassenden Beschichtungslösung;

das wahlweise Trocknen der beschichteten, monoaxial gereckten Polyesterfolie;

das 2-bis 6-fache Recken der resultierenden, monoaxial gereckten Polyesterfolie bei einer Temperatur von 80 bis 130 °C in einer zur vorausgehenden Reckrichtung senkrechten Richtung; und

das Unterziehen einer Wärmebehandlung bei einer Temperatur von 150 bis 250 °C während 1 bis 600 Sekunden umfassen.

2. Antistatische Polyesterfolie nach Anspruch 1, wobei die Überzugsschicht weiterhin ein von dem Polymer mit Stickstoffatomen in dessen Hauptkette verschiedenes Polymer umfaßt.

3. Antistatische Polyesterfolie nach Anspruch 2, wobei der Gehalt des von dem Polymer mit Stickstoffatomen in dessen Hauptkette verschiedenen Polymeren in der Überzugsschicht 0 bis 100 000 Gew.-Teile, bezogen auf 100 Gew.-Teile des Polymeren mit kationischen Stickstoffatomen in dessen Hauptkette, beträgt.

4. Antistatische Polyesterfolie nach Anspruch 2, wobei das von dem Polymer mit Stickstoffatomen in dessen Hauptkette verschiedene Polymer ein solches ist, welches aus der aus wasserlöslichen Polymeren und kationischen oder nichtionischen Wasserdispersionen oder Hydrosolen bestehenden Gruppe gewählt ist.

5. Antistatische Polyesterfolie nach Anspruch 4, wobei das wasserlösliche Polymer mindestens eines ist, welches aus der aus Polyvinylalkohol, Polyacrylamiden, Polyalkylenglykolen, Polyalkyleniminen, Polyvinylpyrrolidon, Methylcellulose, Hydroxyethylcellulose, Stärke, Sacchariden, Gummiarabikum, Dextran, Pullulan, Leim, Gelatine und Casein bestehenden Gruppe gewählt ist.

6. Antistatische Polyesterfolie nach Anspruch 4, wobei die kationischen oder nichtionischen Wasserdispersionen oder Hydrosole mindestens eines ist, welches aus der aus Wasserdispersionen und Hydrosolen von Polyestern, Polyacrylaten, Polyurethanen, Polyamiden, halogenierten Polyolefinen, Polyvinylidenchlorid und Styrol-Butadien-Kautschuk bestehenden Gruppe gewählt ist.

7. Antistatische Polyesterfolie nach Anspruch 1, wobei die Überzugsschicht weiterhin ein Vernetzungsmittel umfaßt.

8. Antistatische Polyesterfolle nach Anspruch 7, wobei der Gehalt des Vernetzungsmittels in der Überzugsschicht 0 bis 10 000 Gew.-Teile, bezogen auf 100 Gew.-Teile des Polymeren mit kationischen Stickstoffatomen in dessen Hauptkette, beträgt.

9. Antistatische Polyesterfolie nach Anspruch 1, wobei die Überzugsschicht weiterhin anorganische Teilchen enthält.

10. Antistatische Polyesterfolie nach Anspruch 9, wobei der Gehalt der anorganischen Teilchen in der Überzugsschicht 0 bis 1000 Gew.-Teile, bezogen auf 100 Gew.-Teile des Polymeren mit kationischen Stickstoffatomen in dessen Hauptkette, beträgt.

**Revendications**

1. Film de polyester antistatique qui comprend un film de polyester et au moins une couche de revêtement, contenant une quantité antistatique efficace d'un polymère ayant des atomes d'azote cationiques dans sa chaîne principale, sur une des surfaces dudit film de polyester de base ou sur les deux, ledit polymère ayant des atomes d'azote cationiques dans sa chaîne principale étant au moins un polymère choisi dans le groupe constitué par les polymères d'ionène qui ont respectivement des motifs constitutifs représentés par les formules (i), (ii), (iii) ou (iv) suivantes :

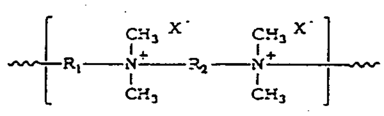
(i)

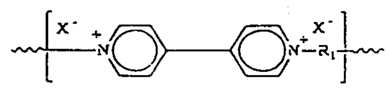
(ii)

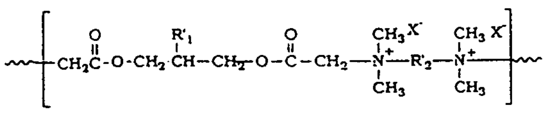
(iii)

ou

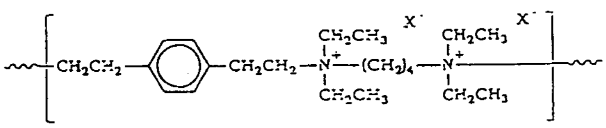
(iv)

dans lesquelles X est un atome de brome ou de chlore ; $R_1$ et $R_2$ représentent indépendamment des groupes alkylène, des groupes arylène, des groupes xylylène, des groupes divalents (A) ayant des hétéroéléments dérivés de composés choisis dans le groupe constitué par les éthers, l'urée et ses dérivés, la pipérazine et ses dérivés, ou des groupes divalents (B) dérivés de composés choisis dans le groupe constitué par les polyacrylates, les polyesters, les polyuréthannes, les polyoléfines et les polyoléfines halogénées ; lesdits groupes alkylène, lesdits groupes arylène, lesdits groupes xylylène et lesdits groupes divalents (A) peuvent être substitués par un groupe hydroxy ou un groupe monovalent dérivé d'un composé choisi dans le groupe constitué par les esters, les éthers, les alcools, les amides, les uréthannes et les cétones ; $R'_1$ représente un groupe monovalent dérivé d'un composé organique désiré quelconque qui peut contenir divers groupes fonctionnels ; $R'_2$ représente un groupe divalent dérivé d'un composé organique désiré quelconque ; ledit film de polyester antistatique étant formé selon les étapes consistant à :

soumettre un film de polyester amorphe à un étirage monoaxial de 2 à 6 fois, à une température de 60 à 130 °C, selon un procédé d'étirage au rouleau ;

revêtir l'une ou les deux surfaces du film de polyester à étirage monoaxial avec une solution de revêtement comprenant le polymère ayant des atomes d'azote cationiques dans sa chaîne principale ;

facultativement sécher le film de polyester à étirage monoaxial revêtu ;

étirer le film de polyester à étirage monoaxial obtenu de 2 à 6 fois, à une température de 80 à 130 °C, dans la direction perpendiculaire à la première direction d'étirage ; et

soumettre à un traitement thermique à une température de 150 à 250 °C pendant 1 à 600 secondes.

2. Film de polyester antistatique selon la revendication 1, dans lequel ladite couche de revêtement comprend de plus un polymère autre que le polymère ayant des atomes d'azote dans sa chaîne principale.

3. Film de polyester antistatique selon la revendication 2, dans lequel la teneur dudit polymère autre que le polymère ayant des atomes d'azote dans sa chaîne principale, dans ladite couche de revêtement, est de 0 à 100 000 parties en poids pour 100 parties en poids dudit polymère ayant des atomes d'azote cationiques dans sa chaîne principale.

4. Film de polyester antistatique selon la revendication 2, dans lequel ledit polymère autre que le polymère ayant des atomes d'azote dans sa chaîne principale est choisi dans le groupe constitué par les polymères solubles dans l'eau et les dispersions aqueuses ou les hydrosols cationiques ou non ioniques.

5. Film de polyester antistatique selon la revendication 4, dans lequel lesdits polymères solubles dans l'eau sont au moins un polymère choisi dans le groupe constitué par l'alcool polyvinylique, les polyacrylamides, les polyalkylèneglycols, les polyalkylène-imines, la polyvinylpyrrolidone, la méthylcellulose, l'hydroxyéthylcellulose, l'amidon, les saccharides, la gomme arabique, le dextrane, le pullulane, la colle, la gélatine et la caséine.

6. Film de polyester antistatique selon la revendication 4, dans lequel lesdites dispersions aqueuses ou lesdits hydrosols cationiques ou non ioniques sont au moins un des composants du groupe constitué des dispersions aqueuses et des hydrosols de polyesters, de polyacrylates, de polyuréthannes, de polyamides, de polyoléfines halogénées, de poly(chlorure de vinylidène) et de caoutchouc de styrène-butadiène.

7. Film de polyester antistatique selon la revendication 1, dans lequel ladite couche de revétement comprend de plus un agent réticulant.

8. Film de polyester antistatique selon la revendication 7, dans lequel la teneur dudit agent réticulant dans ladite couche de revêtement est de 0 à 10 000 parties en poids pour 100 parties en poids du polymère ayant des atomes d'azote cationiques dans sa chaîne principale.

9. Film de polyester antistatique selon la revendication 1, dans lequel ladite couche de revêtement comprend de plus des particules minérales.

10. Film de polyester antistatique selon la revendication 9, dans lequel la teneur desdites particules minérales dans ladite couche de revêtement est de 0 à 1 000 parties en poids pour 100 parties en poids dudit polymère ayant des atomes d'azote cationiques dans sa chaîne principale.